# EUROPEAN PATENT SPECIFICATION

(11) **EP 3 878 264 B1**
(45) Date of publication and mention of the grant of the patent: **18.10.2023**
(21) Application number: 21153379.9
(22) Date of filing: 26.01.2021
(51) Int. Cl.: A01D 34/66, A01D 57/20, A01D 57/30, A01D 75/30

(54) **AGRICULTURAL APPARATUS**
LANDWIRTSCHAFTLICHE VORRICHTUNG
APPAREIL AGRICOLE

(30) Priority: 11.03.2020 GB 202003488
(43) Date of publication of application: 15.09.2021
(73) Proprietor: AGCO International GmbH, 8212 Neuhausen am Rheinfall (CH)
(72) Inventor: KINAST, Ronnie, 90537 Feucht (DE); FILLEP, Johannes, 90537 Feucht (DE)
(74) Representative: AGCO Intellectual Property Department

(56) References cited:
- EP-A1- 2 529 614
- EP-A1- 2 769 613
- EP-A1- 2 829 168
- EP-A1- 3 286 999
- WO-A1-2018/011016
- US-A1- 2012 060 459

## Description

### FIELD OF THE INVENTION

The present invention relates to a mower combination comprising an agricultural vehicle and a number of work units suitable for generating swathes of cut crop, that is for cutting a standing crop such as hay.

### BACKGROUND

It is known to provide a mower combination in which a first mower unit is located ahead of an agricultural vehicle such as a tractor with two further lateral mower units trailing the agricultural vehicle. The rear mower units are provided with conveyor units for depositing cut crop into a swath or swathes behind the agricultural vehicle.

Typically the conveyor units are operated at constant speeds. This has as a disadvantage that as the speed of the agricultural vehicle is increased, the harvesting throughput increases leading to a build-up of cut crop on the conveyor units with an increasing risk that the build-up may become a blockage. When this happens mowing must stop while an operator attends to clearing of the blockage. In a time sensitive operation such a mowing, such stoppages are highly undesirable.

It is an advantage of the present invention that this problem is addressed.

Other advantages of the present invention will become apparent as discussed below.

### SUMMARY OF THE INVENTION

The invention is set out in the appended set of claims.

According to a first aspect, a mower combination comprises an agricultural vehicle and a number of work units suitable for cutting a standing crop connected to the agricultural vehicle, including a front work unit and two lateral work units located behind and to the sides of the front work unit, each of the lateral work units being provided with conveyor units to deposit the cut crop as a swath, the mower combination further comprising a control unit receiving a plurality of signals, including signals representing the speed of the agricultural vehicle , the control unit being configured to receive the plurality of signals and monitor the signals representing the speed of the mower combination characterised in that a transverse position of each of the conveyor units may be altered and in that the plurality of signals further includes signals representing the speed of each of the conveyor units and a transverse position of each of the conveyor units, the control unit being configured to compare the signals representing the speed of the mower combination, a speed of operation of the conveyor units and a transverse position of each of the conveyor units against a predetermined set of values and to adjust the speed of operation and the transverse position of at least one conveyor unit based on this comparison.

This has as an advantage that the speed of operation of the conveyor units can be altered to accommodate increased volumes of harvested crop.

Preferably the signal representing the speed of the mower combination can be provided by the agricultural vehicle, by a speed sensor, such as a radar sensor, provided on the mower combination or by information provided by a GPS sensor. Preferably the conveyor units comprise conveyor belts or conveyor screws.

Preferably, the agricultural apparatus further comprises a user terminal coupled to the control unit, the user terminal providing feedback to an operator of the adjustment of the speed of operation of the at least one conveyor unit.

More preferably, the user terminal provides feedback to an operator of the adjustment of the transverse position of at least one conveyor unit.

According to a second aspect, a method of operation of a mower combination comprising an agricultural vehicle and a number of work units suitable for cutting a standing crop connected to the agricultural vehicle, including a front work unit and two lateral work units located behind and to the sides of the front work unit, each of the lateral work units being provided with conveyor units to deposit the cut crop as a swath, the agricultural apparatus further comprising a control unit receiving a plurality of signals comprises the steps of: receiving in real time input signals corresponding to the speed of the agricultural vehicle, to the speed of operation of at least one conveyor unit forming a part of the mower combination and to a transverse position of the at least one conveyor unit; and automatically adjusting the speed of operation and lateral displacement of the at least one conveyor unit to be adjusted based on a comparison of the input signals with respective targeted values..

According to a third aspect, a computer readable program comprises instructions that when executed on a control unit of a mower comination according to the first aspect to implement the method of the second aspect.

### BRIEF DESCRIPTION OF THE DRAWINGS

The invention will now be described, by way of example only, with reference to the accompanying drawings, in which:
Figure 1 shows a plan view of an agricultural apparatus for use in the present invention;

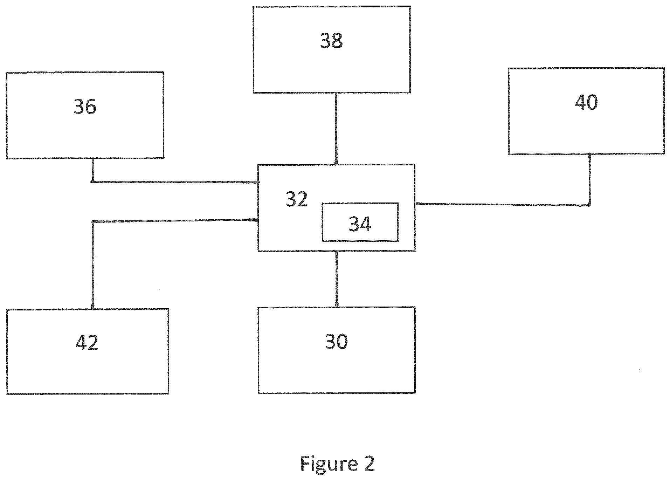

Figure 2 shows a schematic view of elements of an agricultural apparatus for use in the present invention;
Figure 3 shows a flow diagram illustrating an example control method in accordance with the present invention; and
Figure 4 shows a flow diagram illustrating an additional example control method in accordance with the present invention.

### DETAILED DESCRIPTION OF SPECIFIC EMBODIMENTS OF THE INVENTION

The invention will now be described in the following detailed description with reference to the drawings, wherein preferred embodiments are described in detail to enable practice of the invention. Although the invention is described with reference to these specific preferred embodiments, it will be understood that the invention is not limited to these preferred embodiments. But to the contrary, the invention includes numerous alternatives, modifications and equivalents as will become apparent from consideration of the following detailed description.

Reference to terms such as longitudinal, transverse and vertical are made with respect to a longitudinal vehicle axis which is parallel to a normal forward direction of travel.

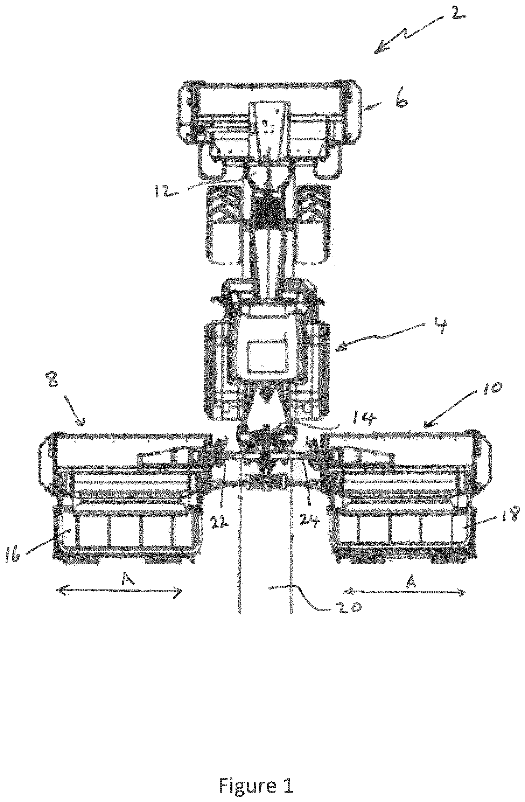

With reference to Figure 1, a plan view of an agricultural apparatus 2 for use in the present invention is shown.

An agricultural apparatus 2 comprises an agricultural vehicle 4 such as a tractor and a number of work units 6,8,10 suitable for cutting standing crop, the work units 6,8,10 being connected to the agricultural vehicle. The work units include a front work unit 6 located to the front of the agricultural vehicle 4 and two lateral work units 8,10 located behind and to the sides of the front work unit 6, each of the work units 6,8,10 depositing cut crop as a swath. The front work unit 6 is conveniently mounted on a front hitch 12 of the agricultural vehicle 4. The two lateral work units 8,10 are conveniently mounted on a central chassis supported from a rear hitch 14 of the agricultural vehicle 4. In a preferred embodiment the work units comprise mowing units.

The lateral work units 8,10 are supported from a central chassis by hydraulic units 22,24. Each hydraulic unit 22,24 may be used to move a respective lateral work unit 8,10 from a working position to a transport position. A headland position may be defined between the working position and the transport position. In the working position the height of each of the lateral work units 8,10 above the ground surface may be further controlled by operation of the hydraulic units 22,24.

In the illustrated embodiment a swath 20 produced by the front work unit 6 is shown. In practice conveyor units 16,18 mounted to the rear of the lateral work units 8,10 will direct cut crop material to one side or the other of the respective lateral work units 8,10 to produce a broader central swath or one or more additional swathes as desired. These swathes are omitted from Figure 1 for clarity.

The conveyor units 16, 18 may be driven in any suitable manner, for example by way of a hydraulic circuit served by an accumulator on the tractor or by their own pump and reservoir mounted on the mowing unit.

The conveyor units 16,18 are mounted to be displaceable with respect to the lateral work units 8,10. The conveyor units 16,18 are mounted to be displaced in a direction transverse to the direction of travel of the agricultural apparatus 2 (arrows A in Figure 1).

A suitable arrangement to enable displacement of the conveyor units is known from the prior art.

The conveyor units 8,10 can comprise conveyor belts or conveyor screws.

An operator can control operation of the front and rear work units 6,8,10 from within the agricultural vehicle 4 by use of a suitable user terminal 30. For example the operator can can cause each of the work units 6,8,10 to move from a working position to a headland position, can cause the rear work units 8,10 to move from the working position to a transport position, or can cause the conveyor units 16,18 to move from an active position to an inactive position.

The user terminal 30 communicates with an electronic control unit 32. The control unit 32 provides signals to control operation of the front and rear hitches 12,14 of the agricultural vehicle 4 and provides signals to control operation of the work units 6,8,10 and the conveyor units 16,18. Conveniently the signals are provided by way of a suitable data communication network such as one compliant with the ISOBUS standard (a network in conformance to the ISO 11783).

The control unit 32 may conveniently comprise a single processor located on the agricultural vehicle or its functions may be split between a processor located on the agricultural vehicle and one or more additional processors located on the work units 6,8,10, the additional processor(s) being in electronic communication with the first processor.

The control unit 32 is also able to access a suitable memory 34. The memory 34 may take any suitable form and is in electronic communication with the control unit 32. The memory 34 is adapted to store, in any suitable manner such as a database or look up table, values for the vehicle speed with respective target values for the speed of operation of the conveyor units 16,18.

The agricultural apparatus 2 further comprises a plurality of sensors adapted to provide input signals to the control unit 32. An input signal representing the forward speed of the agricultural apparatus 2 can be provided by a suitable sensor 36. Examples of such sensors include a sensor incorporated within an electronic control system of the agricultural vehicle 4, a speed sensor provided on the agricultural apparatus 2. Alternatively the input signal could be provided as a result of information provided by a GPS sensor. In the case of a GPS sensor, it will be understood that a network interface 42 connected to the control unit 32 is provided. The network interface 42 can comprise hardware and/or software that enables wireless connection to one or more remotely located computing devices over a network (e.g., a wireless or mixed wireless and wired network). For instance, the network interface 42 may cooperate with browser software or other software of the control unit 30 to communicate with a server device, enabling remote monitoring or control of the agricultural apparatus 2.

Input signals representative of the speed of operation of the conveyor units 16,18 may be provided by speed sensors 38 located on the agricultural apparatus 2, for example within the conveyor units 16,18. Sensors 40 mounted on the agricultural apparatus 2, for example on the conveyor units 16,18 can provide input signals representative of the transverse displacement of the conveyor units 16,18.

The control unit 32 is configured to receive the input signals representing the speed of the agricultural apparatus 2 and the speed of operation of the conveyor units 16,18 and to compare the input signals with reference values for a desired vehicle speed and speed of operation of the conveyor units 16,18 and, as required, adjust the speed of operation of at least one of the conveyor units 16,18 based on this comparison.

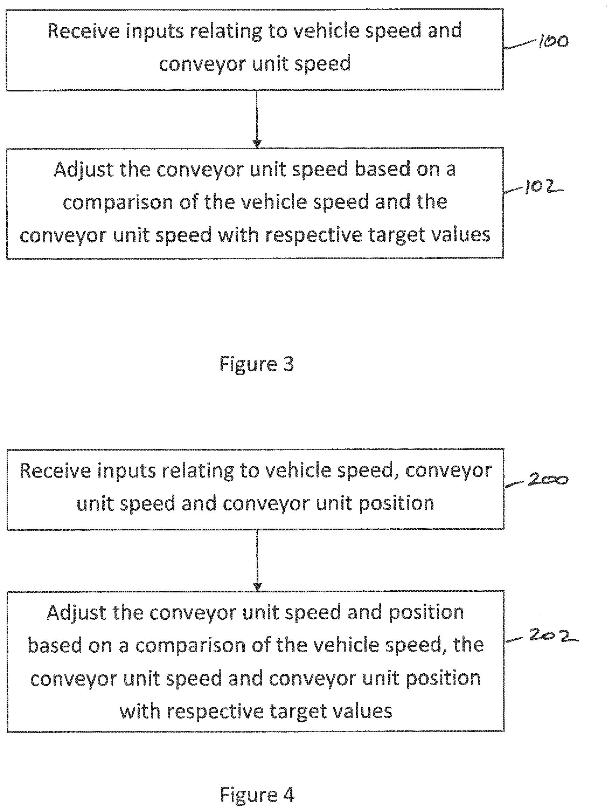

For example as the speed of the agricultural apparatus 2 increases, the control unit 32 detects the increase in the vehicle speed signal (step 100, Figure 3) and based on a comparison of the input signals with the reference or target values stored in the memory 34, the control unit 32 causes the speed of operation of at least one conveyor unit 16,18 to be adjusted (step 102).

This has as an advantage that blockage of the conveyor units 16,18 can be avoided.

The control unit 32 may be configured also to receive the input signals representing the transverse displacement of the conveyor units 16,18. The control unit 34 receives the input signals representing the speed of the agricultural apparatus 2, the speed of operation of the conveyor units 16,18 and a transverse displacement of the conveyor unit 16,18 (step 200, Figure 4), and based on a comparison of the input signals with the reference or target values stored in the memory 34, the control unit 32 causes the speed of operation of at least one of the conveyor units 16,18 and the transverse displacement of the conveyor unit 16,18 to be altered (step 202). It will be understood, that in this case the memory 34 is adapted to store, in any suitable manner such as a database or look up table, values for the vehicle speed with respective target values for the speed of operation of the conveyor units 16,18 and the transverse displacement of the conveyor units 16,18.

In other embodiments, the control unit 32 may receive input from the user terminal 30, as entered by the operator. For instance, the operator may prompt a display of the parameters (the speed of the agricultural apparatus 2, the speed of operation of the conveyor units 16,18, the transverse displacement of the conveyor units 16,18), where the control unit 32 provides the corresponding information for rendering on a display screen in the agricultural vehicle 4 or remotely, or otherwise provided to an operator in other forms (e.g., audibly). In some embodiments, the control unit 32 may provide feedback of any automatic adjustment in the speed of the conveyor units 16,18 or the transverse position of the conveyor units 16,18 to the operator via the user terminal 30.

In this way despite changing the speed of the conveyor unit 16,18 in response to the speed of the agricultural apparatus a constant swath width is produced. This is desirable for the further processing of the cut crop by a subsequent vehicle.

From reading the present disclosure, other modifications will be apparent to persons skilled in the art. Such modifications may involve other features which are already known in the field of mowers and component parts therefore and which may be used instead of or in addition to features already described herein.

## Claims

1. A mower combination comprising an agricultural vehicle (4) and a number of work units (6,8,10) suitable for cutting a standing crop connected to the agricultural vehicle (4), including a front work unit (6) and two lateral work units (8,10) located behind and to the sides of the front work unit (6), each of the lateral work units (8,10) being provided with conveyor units (16,18) to deposit the cut crop as a swath (20), the mower combination further comprising a control unit (32) receiving a plurality of signals, including signals representing the speed of the mower combination, the control unit (32) being configured to monitor the plurality of signals representing the speed of the mower combination, **characterised in that** a tranverse position of each of the conveyor units (16,18) may be altered and **in that** the plurality of signals further includes signals representing the speed of each of the conveyor units (16,18) and a transverse position of each of the conveyor units (16,18), the control unit (32) being configured to compare the signals representing the speed of the mower combination, a speed of operation of the conveyor units (16,18) and a transverse position of each of the conveyor units (16,18) against a predetermined set of values and to adjust the speed of operation and the transverse position of at least one conveyor unit (16,18) based on this comparison.

2. A mower combination according to claim 1, **characterised in that** the signal representing the speed of the mower combination can be provided by the agricultural vehicle (4), by a speed sensor provided on the mower combination or by information provided by a GPS sensor.

3. A mower combination according to claim 1 or claim 2, **characterised in that** the conveyor units comprise conveyor belts or conveyor screws.

4. A method of operation of a mower combination comprising an agricultural vehicle (4) and a number of work units (6,8,10) suitable for cutting a standing crop connected to the agricultural vehicle (4), including a front work unit (6) and two lateral work units (8,10) located behind and to the sides of the front work unit (6), each of the lateral work units (8,10) being provided with conveyor units (16,18) to deposit the cut crop as a swath (20), the mower combination further comprising a control unit (32) receiving a plurality of signals, the method comprising the steps of: receiving in real time input signals corresponding to the speed of the agricultural vehicle (4),to the speed of operation of at least one conveyor unit (16,18) forming a part of the mower combination and to a transverse position of the at least one conveyor unit (16,18); and automatically adjusting the speed of operation and lateral displacement of the at least one conveyor unit (16,18) based on a comparison of the input signals with respective targeted values.

5. A computer readable program comprises instructions that, when implemented on a control unit of a mower combination according to any of claim 1 to claim 3 to implement the method of claim 4.

## Patentansprüche

1. Mähkombination mit einem landwirtschaftlichen Fahrzeug (4) und mehreren Arbeitseinheiten (6, 8, 10), die geeignet sind, stehendes Erntegut zu schneiden und mit dem landwirtschaftlichen Fahrzeug verbunden sind, mit einer vorderen Arbeitseinheit (6) und zwei lateralen Arbeitseinheiten (8, 10), die hinter und seitlich von der vorderen Arbeitseinheit (6) angeordnet sind, wobei jede der lateralen Arbeitseinheiten (8, 10) mit mindestens einer Fördereinheit (16, 18) zum Ablegen des geschnittenen Ernteguts als Schwade (20) ausgestattet ist, wobei die Mähkombination des Weiteren eine Steuer- oder Regeleinheit (32) aufweist, die mehrere Signale empfängt einschließlich Signalen, die die Geschwindigkeit der Mähkombination repräsentieren, wobei die Steuer- oder Regeleinheit (32) konfiguriert ist zum Überwachen der mehreren Signale, die die Geschwindigkeit der Mähkombination repräsentieren, **dadurch gekennzeichnet, dass** eine transversale Position jeder Fördereinheit (16, 18) verändert werden kann und dass die mehreren Signale Signale aufweisen, die die Geschwindigkeit jeder Fördereinheit (16, 18) und eine transversale Position jeder Fördereinheit (16, 18) repräsentieren, wobei die Steuer- oder Regeleinheit (32) konfiguriert ist für ein Vergleichen der Signale, die die Geschwindigkeit der Mähkombination, eine Betriebsgeschwindigkeiten der Fördereinheiten (16, 18) und einer transversalen Position jeder Fördereinheit (16, 18) mit einem vorgegebenen Satz von Werten zu vergleichen und für ein Anpassen der Betriebsgeschwindigkeit und der transversalen Position von mindestens einer Fördereinheit (16, 18) auf Basis dieses Vergleiches.

2. Mähkombination nach Anspruch 1, **dadurch gekennzeichnet, dass** das Signal, welches die Geschwindigkeit der Mähkombination repräsentiert, von dem landwirtschaftlichen Fahrzeug (4) bereitgestellt werden kann durch einen Geschwindigkeitssensor, der an der Mähkombination vorgesehen ist, oder durch Informationen, die von einem GPS-Sensor bereitgestellt werden.

3. Mähkombination nach Anspruch 1 oder 2, **dadurch gekennzeichnet, dass** die Fördereinheiten Gutförderer oder Schraubenförderer aufweisen.

4. Verfahren zum Betrieb einer Mähkombination mit einem landwirtschaftlichen Fahrzeug (4) und mehreren Arbeitseinheiten (6, 8, 10), die für ein Schneiden eines stehenden Ernteguts geeignet sind und mit dem landwirtschaftlichen Fahrzeug (4) verbunden sind, mit einer vorderen Arbeitseinheit (6) und zwei lateralen Arbeitseinheiten (8, 10), die hinter und seitlich der vorderen Arbeitseinheit (6) angeordnet sind, wobei jede seitliche Arbeitseinheit (8, 10) mit mindestens einer Fördereinheit (16, 18) zum Ablegen des geschnittenen Ernteguts als Schwade (20) ausgestattet ist, wobei die Mähkombination des Weiteren eine Steuer- oder Regeleinheit (32) aufweist, die mehrere Signale empfängt, wobei das Verfahren die folgenden Verfahrensschritte aufweist: Empfangen von Eingangssignalen in Echtzeit, die der Geschwindigkeit des landwirtschaftlichen Fahrzeugs (4), der Betriebsgeschwindigkeit mindestens einer Fördereinheit (16, 18), die Bestandteil der Mähkombination ist, und einer transversalen Position der mindestens einen Fördereinheit (16, 18) entsprechen; und automatisches Anpassen der Betriebsgeschwindigkeit und der lateralen Verlagerung der mindestens einen Fördereinheit (16, 18) auf Basis eines Vergleichs der Eingangssignale mit zugeordneten Zielwerten.

5. Computerlesbares Programm mit Instruktionen, die bei Implementierung in einer Steuer- oder Regeleinheit einer Mähkombination nach einem der Ansprüche 1 bis 3 das Verfahren nach Anspruch 4 implementieren.

## Revendications

1. Combinaison de faucheuse comprenant un véhicule agricole (4) et un certain nombre d'unités de travail (6, 8, 10) adaptées afin de couper une culture sur pied, reliées au véhicule agricole (4), comportant une unité de travail avant (6) et deux unités de travail latérales (8, 10) situées derrière et sur les côtés de l'unité de travail avant (6), chacune des unités de travail latérales (8, 10) comportant des unités de convoyage (16, 18) destinées à déposer la culture coupée sous la forme d'andain (20), la combinaison de faucheuse comprenant, en outre, une unité de commande (32) recevant une pluralité de signaux, comportant des signaux représentant la vitesse de la combinaison de faucheuse, l'unité de commande (32) étant configurée de manière à contrôler la pluralité de signaux représentant la vitesse de la combinaison de faucheuse, **caractérisée en ce qu'**une position transversale de chacune des unités de convoyage (16, 18) peut être modifiée et **en ce que** la pluralité de signaux comporte, en outre, des signaux représentant la vitesse de chacune des unités de convoyage (16, 18) et une position transversale de chacune des unités de convoyage (16, 18), l'unité de commande (32) étant configurée de manière à comparer les signaux représentant la vitesse de la combinaison de faucheuse, une vitesse de travail des unités de convoyage (16, 18) et une position transversale de chacune des unités de convoyage (16, 18) à un ensemble de valeurs prédéterminé et à ajuster la vitesse de travail et la position transversale d'au moins une unité de convoyage (16, 18) sur la base de cette comparaison.

2. Combinaison de faucheuse selon la revendication 1, **caractérisée en ce que** le signal représentant la vitesse de la combinaison de faucheuse peut être délivré par le véhicule agricole (4), par un capteur de vitesse agencé sur la combinaison de faucheuse ou par les informations délivrées par un capteur GPS.

3. Combinaison de faucheuse selon la revendication 1 ou 2, **caractérisée en ce que** les unités de convoyage comprennent des convoyeurs à bandes ou des convoyeurs à vis.

4. Procédé de commande d'une combinaison de faucheuse comprenant un véhicule agricole (4) et un certain nombre d'unités de travail (6, 8, 10) adaptées afin de couper une culture sur pied, reliées au véhicule agricole (4), comportant une unité de travail avant (6) et deux unités de travail latérales (8, 10) situées derrière et sur les côtés de l'unité de travail avant (6), chacune des unités de travail latérales (8, 10) comportant des unités de convoyage (16, 18) destinées à déposer la culture coupée sous la forme d'andain (20), la combinaison de faucheuse comprenant, en outre, une unité de commande (32) recevant une pluralité de signaux, le procédé comprenant les étapes de : réception en temps réel de signaux d'entrée correspondant à la vitesse du véhicule agricole (4), à la vitesse de travail d'au moins une unité de convoyage (16, 18) faisant partie de la combinaison de faucheuse et à une position transversale de la au moins une unité de convoyage (16, 18) ; et de réglage automatique de la vitesse de travail et du déplacement latéral de la au moins une unité de convoyage (16, 18) sur la base d'une comparaison des signaux d'entrée avec des valeurs de consigne respectives.

5. Programme pouvant être lu par ordinateur comprenant des instructions qui, lorsqu'elles sont exécutées sur une unité de commande d'une combinaison de faucheuse selon l'une quelconque des revendications 1 à 3, assurent la mise en oeuvre du procédé selon la revendication 4.
